# EUROPÄISCHE PATENTANMELDUNG

(11) **EP 3 766 909 A1**
(43) Veröffentlichungstag der Anmeldung: **20.01.2021**
(21) Anmeldenummer: 20185424.7
(22) Anmeldetag: 13.07.2020
(51) Int. Cl.: C08G 18/16, C08G 18/18, C08G 18/24, C08G 18/48, C08G 18/76, A47C 27/08, C08G 101/00

(54) **PU-SCHAUMSTOFF-FORMKÖRPER**

(30) Priorität: 19.07.2019 US 201962876062 P
(71) Anmelder: Evonik Operations GmbH, 45128 Essen (DE)
(72) Erfinder: Terheiden, Annegret, 46519 Alpen (DE); Landers, Rüdiger, 45257 Essen (DE); Hermann, Daniela, 40477 Düsseldorf (DE); Kniss, Jane Garrett, Kempton, PA Pennsylvania 19529 (US); Borgogelli, Robert, Midlothian, VA Virginia 23114 (US); White, Kathie, Mechanicsville, VA Virginia 23116 (US); Wessely, Isabelle Denise, 76137 Karlsruhe (DE)
(74) Vertreter: Evonik Patent Association

(57) **Zusammenfassung**

PU-Schaumstoff-Formkörper, vorzugsweise Matratze und/oder Kissen, wobei der Polyurethan-Schaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels erhalten wurde, werden beschrieben.

## Beschreibung

Die vorliegende Erfindung liegt auf dem Gebiet der PU-Schaumstoffe. Sie betrifft insbesondere die Bereitstellung von PU-Schaumstoff-Formkörpern, wie z.B. Matratzen und/oder Kissen.

PU-Schaumstoff-Formkörper, wie z.B. Polyurethanschaum-haltige Matratzen und/oder Kissen sind aus dem Stand der Technik lange bekannt und finden weltweite Verbreitung. Es hat nicht an Versuchen gemangelt, solche Gegenstände immer weiter zu verbessern. Der Optimierungsbedarf ist bis heute nicht erloschen.

Ein Problem im Zusammenhang mit PU-Schaumstoff-Formkörpern ist deren Transport und Lagerung. PU-Schaumstoff-Formkörper, wie z.B. Matratzen, sind sehr sperrig und werden daher für Lagerungs- und Transportzwecke aus Platzgründen oft komprimiert, insbesondere komprimiert und vakuumiert. Große Distributoren liefern bestimmte Matratzen zunehmend komprimiert und in gerollter Form aus.

Solche Verpackungen sind insbesondere für Matratzen weit verbreitet. Bei der Vakuumverpackung wird die Matratze z.B. in einen Beutel aus Plastikfolie gesteckt. Dann wird die so vorverpackte Matratze in eine Presse gelegt und bei offenem Beutelende gepresst. Die Luft entweicht. Danach wird das offene Beutelende luftdicht zugeschweißt. Die so entstandene Vakuumpackung wird dann gerollt und in einen Außenbeutel eingeschoben. Die Matratze kann sich nicht wieder ausdehnen, da der Außenbeutel sie in der Rollenform hält.

Um eine Matratze z.B. so flach zu drücken, wie eine Maschine es beim Rollen schafft, braucht man je nach Matratze zwischen 40.000 und 250.000 Newton. Das entspricht der Gewichtskraft einer Masse von 4 bis 25 Tonnen.

Wie unmittelbar ersichtlich ist, kann eine solche Krafteinwirkung im Zusammenhang mit der Kompression von PU-Schaumstoff-Formkörpern zu einer Materialermüdung führen. Es ist ein sehr relevantes Problem, PU-Schaumstoff-Formkörper bereitzustellen, die auch nach längerer Kompression befähigt sind, ihre ursprüngliche Dimension wiederzuerlangen.

Konkrete Aufgabe der vorliegenden Erfindung war vor diesem Hintergrund die Bereitstellung von PU-Schaumstoff-Formkörpern, wie insbesondere Polyurethanschaum-haltigen Matratzen und/oder Kissen, die gut geeignet sind, nach einer Kompression über einen Zeitraum von mindestens 20 Stunden ihre ursprüngliche Form wieder zu erlangen.

Es wurde im Rahmen dieser Erfindung überraschend gefunden, dass die Lösung dieser Aufgabe vom Gegenstand der Erfindung ermöglicht wird.

Gegenstand dieser Erfindung ist ein PU-Schaumstoff-Formkörper, vorzugsweise Matratze und/oder Kissen, dadurch gekennzeichnet, dass der Polyurethan-Schaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels erhalten wurde,

Formeln (1a) und (1b) wie nachfolgend definiert: 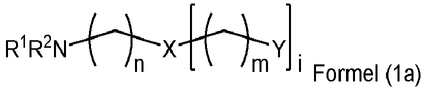 wobei für Formel (1a) gilt:
- X: Sauerstoff, Stickstoff oder Amin (NR³ oder NR³R⁴), insbesondere Sauerstoff,
- Y: Amin NR⁸R⁹ oder Ether OR⁹, insbesondere Amin NR⁸R^{9,} mit R⁸ = Methyl und R⁹ = Aminopropyl,
- R^{1,2}: gleiche oder verschiedene Kohlenwasserstoffreste mit 1-8 C-Atomen, Phenyl, Cyclohexyl oder Wasserstoff, bevorzugt Methyl, Ethyl, *iso*-Propyl oder Wasserstoff, besonders bevorzugt Methyl oder Wasserstoff, insbesondere Methyl,
- R³⁻⁹: gleiche oder verschiedene Kohlenwasserstoffreste mit 1-8 C-Atomen, die ggf. eine NH oder NH₂-Gruppe tragen, Phenyl, Cyclohexyl oder Wasserstoff, bevorzugt Methyl, Ethyl, *iso*-Propyl, Aminoalkyl oder Wasserstoff, besonders bevorzugt Methyl, Aminopropyl oder Wasserstoff, insbesondere Methyl oder Aminopropyl,
- m: gleich 1 bis 4, bevorzugt 2 und 3, insbesondere 2,
- n: gleich 2,
- i: gleich 0 bis 3, bevorzugt 0, 1, und 2, insbesondere 1,
mit der Maßgabe, dass mindestens eine der Gruppen X, Y oder R¹⁻⁹ eine mit der Polyurethanmatrix reaktive Funktionalität, bevorzugt eine isocyanatreaktive Funktionalität, insbesondere bevorzugt NH oder OH trägt, 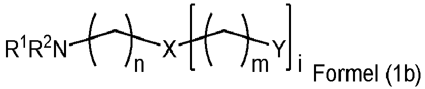 wobei für Formel (1b) gilt:
- X: Sauerstoff, Stickstoff, Hydroxyl, Amine (NR³ oder NR³R⁴) oder Harnstoff (N(R⁵)C(O)N(R⁶) oder N(R⁵)C(O)NR⁶R⁷), insbesondere Harnstoff (N(R⁵)C(O)N(R⁶) oder N(R⁵)C(O)NR⁶R⁷) oder Stickstoff,
- Y: Amin (NR⁸R⁹) oder Ether (OR⁹), insbesondere Amin (NR⁸R⁹) mit R⁸ und R⁹= Methyl,
- R^{1,2}: gleiche oder verschiedene Kohlenwasserstoffreste mit 1-8 C-Atomen, die ggf. eine OH-Gruppe tragen, Phenyl, Cyclohexyl oder Wasserstoff, bevorzugt Methyl, Ethyl, *iso*-Propyl, -C₂H₃(OH)CH₃, -C₂H₄OH oder Wasserstoff, besonders bevorzugt Methyl, -C₂H₃(OH)CH₃,--C₂H₄OH oder Wasserstoff, insbesondere Methyl oder Wasserstoff,
- R³⁻⁹: gleiche oder verschiedene Kohlenwasserstoffreste mit 1-8 C-Atomen, die ggf. eine OH- oder eine NH/NH₂-Gruppe tragen, Phenyl, Cyclohexyl oder Wasserstoff, bevorzugt Methyl, Ethyl, *iso*-Propyl, -C₂H₃(OH)CH₃, -C₂H₄OH, Aminoalkyl oder Wasserstoff, besonders bevorzugt Methyl, -C₂H₃(OH)CH₃, -C₂H₄OH, Aminopropyl oder Wasserstoff, insbesondere Wasserstoff oder Methyl,
- m: gleich 1 bis 4, bevorzugt 2 und 3, insbesondere 3,
- n: gleich 3,
- i: gleich 0 bis 3, bevorzugt 0, 1, und 2, insbesondere 1 oder 2,
mit der Maßgabe, dass mindestens eine der Gruppen X, Y oder R¹⁻⁹ eine mit der Polyurethanmatrix reaktive Funktionalität, bevorzugt eine isocyanatreaktive Funktionalität, insbesondere bevorzugt NH oder OH trägt.

Optional können dabei natürlich vorteilhafterweise auch weitere übliche Additive, Aktivstoffe und Hilfsstoffe zusätzlich eingesetzt werden. Matratzen sind im Sinne dieser Erfindung ganz besonders bevorzugt. Das gilt vorteilhafterweise auch für alle folgenden bevorzugten Ausführungsformen.

Vorteilhafterweise ist der derart unter Einsatz der Verbindungen der Formel (1a) und (1b) bereitgestellte PU-Schaumstoff-Formkörper gut geeignet, um auch nach einer längeren Kompression über einen Zeitraum von mindestens 20 Stunden seine ursprüngliche Form wiedererlangen zu können.

Ein weiterer Vorteil ist, dass die betreffenden PU-Schaumstoff-Formkörper besonders emissionsarm sind mit Blick auf Amin-Emissionen.

"Emissionsarm" hinsichtlich von Aminen umfasst im Sinne der vorliegenden Erfindung insbesondere, dass der Polyurethanweichschaumstoff zur Herstellung von Matratzen und/oder Kissen, vorzugsweise zur Herstellung von Matratzen, eine Amin-Emission von ≥ 0 µg/m³ und ≤ 40 µg/m³, vorzugsweise ≤ 10 µg/m³, besonders bevorzugt ≤ 5 µg/m³, aufweist, entsprechend ermittelt nach dem Prüfkammerverfahren in Anlehnung an die DIN-Norm DIN EN ISO 16000-9:2008-04, 24 Stunden nach Prüfkammerbeladung. Diese Methode ist in der EP 3205680A1, dort in Absatz [0070], genau beschrieben, worauf hiermit Bezug genommen wird.

Ein weiterer Vorteil ist, dass die betreffenden PU-Schaumstoff-Formkörper auch Emmissions-Spezifikationen wie CertiPur und/oder VDA 278 erfüllen können. Emissionsarm nach CertiPur heißt hierbei, dass die Gesamt - Emissionen flüchtiger organischer Substanzen kleiner 500 µg/m³ sind, bestimmt nach dem Verfahren ISO 16000-9 und ISO 16000-11. Emissionsarm nach VDA 278 heißt, dass die PU Schaumstoffe die Spezifikationen der Methode Daimler Chrysler PB VWL 709 erfüllen. Die Spezifikation VDA 278 wird auch im Beispielteil beschrieben.

PU-Schaumstoffe (Polyurethanschaumstoffe) und deren Herstellung sind dem Fachmann wohlbekannt und bedürfen an sich keiner weiteren Erläuterung. Formkörper sind geformte Körper unterschiedlicher Gestalt. Bevorzugte Gestalten sind z.B. Geometrien wie Kugeln, Quader, Zylinder usw. PU-Schaumstoff-Formkörper sind demnach geformte Körper aus Polyurethanschaumstoff. Besonders bevorzugte PU-Schaumstoff-Formkörper im Sinne dieser Erfindung sind Matratzen und/oder Kissen sowie Schaumstoffblöcke im Allgemeinen.

Matratzen an sich und deren Herstellung sind bekannt. Gewöhnlich bestehen sie aus einem Matratzenkern, z.B. umfassend Schaumstoff, Latex, Naturprodukte und/oder Federkern, sowie einem die Matratze umgebenden Bezug. Für Kissen gilt entsprechendes. Matratze und/oder Kissen im Sinne dieser Anmeldung bedeutet, dass mindestens ein Abschnitt aus Polyurethan-Schaumstoff in der Matratze und/oder dem Kissen enthalten ist. Vorzugsweise bedeutet es, dass zumindest ein Teil der Matratze und/oder des Kissens aus Polyurethan-Schaumstoff oder verschiedenen Polyurethan-Schaumstoffen besteht. Bezogen auf das Gesamtgewicht der Matratze und/oder des Kissens kann dieser Teil zumindest 1 Gew.-% oder 5 Gew.-% oder 25 Gew.-%, vorzugsweise mindestens 50 Gew.-%, insbesondere mindestens 75 Gew.-% ausmachen. Es ist auch möglich, dass die Matratze und/oder das Kissen, abgesehen vom Bezug, ganz und gar aus Polyurethan-Schaumstoff besteht.

Die Herstellung von Polyurethanschaum ist an sich bekannt. Er entsteht durch die bestens erprobte Umsetzung von mindestens einer Polyolkomponente und mindestens einer Isocyanatkomponente in Gegenwart von mindestens einem Treibmittel (z.B. Wasser) im Sinne einer Polyadditionsreaktion. Für die vorliegende Erfindung ist dabei wesentlich, dass diese Umsetzung in Gegenwart zumindest einer Verbindung der Formel (1a) sowie zumindest einer Verbindung der Formel (1b), wie jeweils zuvor definiert, erfolgt.

Der erfindungsgemäße Polyurethan-Schaumstoff ist gemäß einer bevorzugten Ausführungsform der Erfindung ein Polyurethan-Weichschaumstoff, wie vorzugsweise ein Polyurethan-Heißweichschaum, ein Polyurethan-Kaltweichschaum oder ein viskoelastischer Polyurethanweichschaum, oder es wird eine Kombination dieser Weichschaumstoffe verwendet, z.B. zwei oder drei dieser Weichschaumstoffe. Die Differenzierung in die vorgenannten Weichschaumtypen ist dem Fachmann an sich bekannt, es handelt sich um feststehende technische Begriffe, die in der Fachwelt entsprechend etabliert sind, sei aber hier dennoch kurz erläutert.

Der entscheidende Unterschied zum Heißweichschaum besteht bei der Kaltweichschaumherstellung darin, dass zum einen hochreaktive Polyole und optional auch niedermolekulare Vernetzer eingesetzt werden, wobei die Funktion des Vernetzers auch durch höherfunktionelle Isocyanate übernommen werden kann. Somit kommt es bereits in der Expansionsphase (CO₂-Bildung aus -NCO und H₂O) des Schaums zu der Reaktion der Isocyanatgruppen mit den Hydroxylgruppen. Diese schnelle Polyurethanreaktion führt über Viskositätsanstieg gewöhnlich zu einer relativ hohen Eigenstabilität des Schaums während des Treibvorgangs. Bei Polyurethankaltweichschaumstoffen handelt es sich gewöhnlich um hochelastische Schäume, bei denen die Randzonenstabilisierung eine große Rolle spielt. Aufgrund der hohen Eigenstabilität sind die Zellen am Ende des Schäumvorgangs in der Regel nicht genügend geöffnet und es muss noch mechanisch aufgedrückt werden. Hierbei gibt die notwendige Aufdrückkraft ("force to crush" (FTC)) ein Maß für die Offenzelligkeit an. Wünschenswert sind gewöhnlich Schäume mit hoher Offenzelligkeit, die lediglich geringe Aufdruckkräfte benötigen. Bei der Formverschäumung werden Polyurethankaltweichschäume im Gegensatz zu Polyurethanheißweichschäumen bei einer niedrigeren Temperatur, beispielsweise von ≤ 90 °C, hergestellt.

Offenzellige Polyurethanweichschaumstoffe weisen gewöhnlich eine Gasdurchlässigkeit (auch "Porosität" genannt) in einem Bereich von 1 bis 250 mm Wassersäule, insbesondere in einem Bereich von 1 bis 50 mm Wassersäule (vorzugsweise bestimmt durch Messung der Druckdifferenz bei der Durchströmung einer Schaumprobe) auf. Hierfür wird z.B. eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluss wird auf der Schaumplatte platziert. Über die zentrale Bohrung wird ein Luftstrom von 8 l/min in die Schaumprobe geleitet. Je geschlossener der Schaum ist, desto mehr Druck wird aufgebaut und desto mehr wird der Spiegel der Wassersäule nach unten gedrückt und desto größere Werte werden gemessen.

Heißweichschaumstoffe besitzen je nach Anwendung gewöhnlich ein Raumgewicht zwischen 8 und 80 kg/m³. Kaltweichschaumstoffe, insbesondere für die Produktion hochwertiger Matratzen, werden üblicherweise in einem Dichtebereich von 25 - 80 kg/m³ produziert. Hierbei wird insbesondere bei der Verwendung solcher Schaumstoffe als Matratzen, Matratzenbestandteile und/oder Kissen nach regionalen Bedürfnissen, Anforderungen und Vorlieben der Verbraucher unterschieden.

Ein wesentliches Merkmal von Kaltweichschaumstoffen ist die höhere Rückprallelastizität, auch "ball rebound" (BR) oder "resilience" genannt. Ein Verfahren zur Bestimmung der Rückprallelastizität ist beispielsweise in der DIN EN ISO 8307:2008-03 beschrieben. Hierbei wird eine Stahlkugel mit festgelegter Masse aus einer bestimmten Höhe auf den Probenkörper fallen gelassen und dann die Höhe des Rückpralls in % der Abwurfhöhe gemessen. Typische Werte für einen Kaltweichschaum liegen gewöhnlich im Bereich von ≥ 55 %. Kaltweichschaumstoffe werden daher auch oft als HR-Schäume bezeichnet (HR: High Resilience). Demgegenüber weisen Polyurethanheißweichschaumstoffe Rückprall-Werte von gewöhnlich 15 % bis maximal 60 % auf.

Eine spezielle Klasse der Polyurethanschaumstoffe ist die der viskoelastischen Schaumstoffe. Diese sind auch unter dem Namen Memory Foam (zu Deutsch etwa "Schaum mit Erinnerungsvermögen") bekannt und zeichnen sich sowohl durch eine geringe Rückprallelastizität (vorzugsweise < 10%) als auch durch eine langsame, graduelle Rückverformung nach einer erfolgten Kompression aus (Rückverformungszeit vorzugsweise 2 - 10 s). Solche Materialien sind im Stand der Technik wohlbekannt und werden insbesondere auch wegen ihrer energie- und schallabsorbierenden Eigenschaften sehr geschätzt. Typische viskoelastische Schaumstoffe haben gewöhnlich eine geringere Porosität und eine hohe Dichte (bzw. ein hohes Raumgewicht (RG)) verglichen mit konventionellen Polyurethanweichschaumstoffen. Kissen liegen mit einem Raumgewicht von gewöhnlich 30 - 50 kg/m³ am unteren Ende der für viskoelastische Schaumstoffe typischen Dichteskala, wohingegen Matratzen gewöhnlich eine Dichte im Bereich von 40 - 130 kg/m³ aufweisen.

In konventionellen Polyurethanschaumstoffen ordnen sich die harten und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man auch von "phasenseparierten" Materialien. Viskoelastische Polyurethanschaumstoffe stellen in diesem Zusammenhang einen Spezialfall dar, bei welchem die oben beschriebene Phasentrennung nur unvollständig oder überhaupt nicht auftritt. Die Glastemperatur liegt bei viskoelastischen Schaumstoffen vorzugsweise zwischen -20 und +15 °C, die Glasübergangstemperatur von Polyurethanheißweichschaumstoffen und Polyurethankaltweichschaumstoffen dagegen gewöhnlich bei unter -35°C. Von solcher "Struktur-Viskoelastizität", die im Wesentlichen auf der Glastemperatur des Polymers beruht, bei Polyurethanschäumen mit (überwiegend) offenen Zellen zu unterscheiden ist eine solche Viskoelastizität, die auf einen pneumatischen Effekt zurückzuführen ist. In letzterem Fall befinden sich nämlich nahezu geschlossene Zellen innerhalb des Schaumstoffmaterials, also Zellen mit nur einer geringen Öffnung. Durch die geringe Größe der Öffnungen strömt die Luft nach einer Kompression nur langsam wieder ein, was eine verlangsamte Rückverformung zur Folge hat.

Verschiedene Polyurethanweichschaumstoffe werden neben dem Raumgewicht oft nach ihrer Stauchhärte, auch Tragfähigkeit genannt, für bestimmte Anwendungen eingestuft. So liegt die Stauchhärte CLD (Compression Load Deflection), 40 % nach DIN EN ISO 3386-1:2015-10 für Polyurethanheißweichschaumstoffe üblicherweise im Bereich von 2,0 - 8,0 kPa. Kaltweichschaumstoffe weisen in der Regel Werte von 2,0 bis 5,0 kPa, insbesondere von 2,5 bis 4,5 kPa auf, viskoelastische Polyurethanschaumstoffe üblicherweise Werte von 0,1 - 5,0 kPa, insbesondere 0,5 - 3,0 kPa.

Gemäß einer bevorzugten Ausführungsform der Erfindung weisen die erfindungsgemäß einzusetzenden Polyurethan-Schaumstoffe, insbesondere Polyurethan-Weichschaumstoffe, folgende bevorzugte Eigenschaften hinsichtlich Rückprallelastizität, Raumgewicht und/oder Porosität (ggf. nach Aufdrücken der Schäume, wie insbesondere beim Polyurethan-Kaltweichschaum) auf, nämlich eine Rückprallelastizität von 1 bis 80 %, gemessen nach DIN EN ISO 8307:2008-03, und/oder ein Raumgewicht von 5 bis 150 kg/m³ und/oder eine Porosität von 1 bis 250, insbesondere 1 bis 50 mm Wassersäule. Besonders bevorzugt sind alle 3 Kriterien bezüglich Rückprallelastizität, Raumgewicht und/oder Porosität, wie eben beziffert, erfüllt. Insbesondere weist der erfindungsgemäß eingesetzte Polyurethan-Weichschaumstoff eine Stauchhärte CLD, 40 % nach DIN EN ISO 3386-1:2015-10 von 0,1 bis 8,0 kPa auf.

Polyurethan-Heißweichschaum, Polyurethan-Kaltweichschaum oder viskoelastischer Polyurethanweichschaum sowie deren Herstellung sind an sich bekannt. Polyurethan-Heißweichschaum zeichnet sich im Sinne dieser Erfindung insbesondere dadurch aus, dass er eine Stauchhärte CLD, 40 % nach DIN EN ISO 3386-1:2015-10 von 2,0 - 8,0 kPa, und/oder eine Rückprallelastizität von 15 - 60 %, gemessen nach DIN EN ISO 8307:2008-03, und/oder ein Raumgewicht von 8 bis 80 kg/m³ und/oder eine Porosität von 1 bis 250, insbesondere 1 bis 50 mm Wassersäule hat. Eine Möglichkeit der Herstellung wird z.B. in EP 2 481 770 A2 oder EP 2 182 020 A1 beschrieben. Polyurethan-Kaltweichschaum zeichnet sich im Sinne dieser Erfindung insbesondere dadurch aus, dass er eine Stauchhärte CLD, 40 % nach DIN EN ISO 3386-1:2015-10 von 2,0 - 5,0 kPa, insbesondere von 2,5 - 4,5 kPa, und/oder eine Rückprallelastizität von ≥ 55 %, gemessen nach DIN EN ISO 8307:2008-03, und/oder ein Raumgewicht von 25 bis 80 kg/m³ und/oder eine Porosität (nach Aufdrücken des Schaumes) von 1 bis 250, insbesondere 1 bis 50 mm Wassersäule hat. Eine Möglichkeit der Herstellung wird z.B. in EP 1777252 B1 beschrieben. Viskoelastischer Polyurethanweichschaum zeichnet sich im Sinne dieser Erfindung insbesondere dadurch aus, dass er eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 3,0 kPa, und/oder eine Rückprallelastizität von < 10 %, gemessen nach DIN EN ISO 8307:2008-03, und/oder ein Raumgewicht von 30 bis 130 kg/m³ und/oder eine Porosität (nach Aufdrücken des Schaumes) von 1 bis 250, insbesondere 1 bis 50 mm Wassersäule hat. Eine Möglichkeit der Herstellung wird z.B. in WO 2013/131710 A2 beschrieben. Gemessen werden kann die Glasübergangstemperatur dabei mittels Dynamisch Mechanischer Analyse (DMA) (DIN 53513:1990-03) oder mittels Differentieller Kalorimetrie (DSC) (ISO 11357-2:2013). Dabei handelt es sich genau genommen um einen Glasübergangsbereich, der sich über einen Temperaturbereich erstreckt. Die Angaben zur Glasübergangstemperatur stellen Mittelwerte dar.

Der erfindungsgemäße PU-Schaumstoff-Formkörper, insbesondere die erfindungsgemäße Matratze, weist im Rahmen einer bevorzugten Ausführungsform der Erfindung eine Höhe von mindestens 1 cm bis maximal 50 cm, sowie eine Breite von mindestens 20 cm bis maximal 300 cm auf, sowie eine Länge von mindestens 20 cm bis maximal 300 cm. Bevorzugte Maße sind z.B. Höhen im Bereich von 5 cm bis 40 cm, Breiten im Bereich von 70 cm bis 200 cm, Längen im Bereich von 150 cm bis 220 cm. Der erfindungsgemäße PU-Schaumstoff-Formkörper, insbesondere das erfindungsgemäße Kissen, kann im Rahmen einer bevorzugten Ausführungsform der Erfindung auch eine Höhe von mindestens 1 cm bis maximal 40 cm, sowie eine Breite von mindestens 15 cm bis maximal 200 cm auf, sowie eine Länge von mindestens 15 cm bis maximal 200 cm aufweisen, wobei bevorzugte Maße z.B. Höhen im Bereich von 2 cm bis 30 cm, Breiten im Bereich von 15 cm bis 50 cm, Längen im Bereich von 15 cm bis 50 cm sind.

Gemäß einer weiteren bevorzugten Ausführungsform der Erfindung ist der PU-Schaumstoff-Formkörper eine Matratze und ist vorzugsweise als Mehrzonen-Matratze ausgebildet. Die unterschiedlichen Zonen unterscheiden sich dabei insbesondere durch die jeweilige Härte. Solche Mehrzonen-Matratzen und deren Herstellung sind an sich bekannt. Sie werden breit kommerziell vertrieben. Insbesondere weist die Matratze bis zu sieben Zonen unterschiedlicher Härte auf, die sich über die Matratzenlängsrichtung erstrecken und in der entsprechenden Breite ausgeführt sind. Wenn die Matratze über ihre Fläche verteilt verschiedene Härtezonen aufweist, die insbesondere durch Einschnitte und/oder Hohlräume in der Matratze gebildet sind, so liegt eine weitere bevorzugte Ausführungsform der Erfindung vor.

Nach einer weiteren bevorzugten Ausführungsform der Erfindung kann es sich bei dem PU-Schaumstoff-Formkörper um eine Polyurethan-Kaltschaummatratze, eine viskoelastische Polyurethanweichschaum-Matratze, eine Polyurethan-Heißschaummatratze, eine Polyurethan-Gelschaum-Matratze, eine Latexmatratze oder eine Boxspring-Matratze handeln. Diese Matratzentypen sind an sich dem Fachmann bekannt und werden unter diesen Bezeichnungen auch weltweit vermarktet. Heißschaummatratzen werden am Markt gewöhnlich vereinfacht als Schaumstoffmatratzen bezeichnet. Der erfindungsgemäße Begriff der Matratze umfasst im Sinne dieser Erfindung auch entsprechende Matratzenauflagen und - unterlagen.

Gemäß einer bevorzugten Ausführungsform der Erfindung zeichnet sich der PU-Schaumstoff-Formkörper, vorzugsweise die Matratze, dadurch aus, dass der PU-Schaumstoff-Formkörper, bezogen auf sein Ausgangsvolumen um mindestens 20%, vorzugsweise mindestens 30%, insbesondere mindestens 60% komprimiert wurde und von einem Hilfsmittel, insbesondere Verpackungsmittel, für mindestens 20 Stunden in komprimierter Form gehalten wird.

Geeignete Hilfsmittel, insbesondere Verpackungsmittel sind Beutel und/oder Folien, wie sie z.B. aus dem Bereich der Rollmatratzen bekannt sind. Die Beutel und/oder Folien können durch beliebige Mittel, wie durch einen Clip, oder durch ein Klebeband oder durch Verschweißen verschlossen werden. Die Funktion des Hilfsmittels liegt darin, die komprimierte Form solange erhalten zu können, bis der Abnehmer des PU-Schaumstoff-Formkörpers diesen wieder normal nutzen möchte. Nach Entfernen des Hilfsmittels, insbesondere Verpackungsmittels, dehnt sich der komprimierte Formkörper wieder aus und erlangt im optimalen Fall die ursprüngliche Form und Größe zurück. Die vorliegende Erfindung ermöglicht es, dass eine verbesserte Dimensionswiedererlangung nach Kompression über einen Zeitraum von mindestens 20 Stunden ermöglicht wird.

Gemäß einer weiteren bevorzugten Ausführungsform liegt der PU-Schaumstoff-Formkörper komprimiert und vakuumiert vor, und insbesondere handelt es sich um eine Rollmatratze, die vakuumiert und komprimiert vorliegt.

Die Bereitstellung der diversen im Rahmen dieser Erfindung einsetzbaren PU-Schäume ist an sich bekannt und es kann auf alle bewährten Verfahren zurückgegriffen werden, mit der Besonderheit, dass die PU-Schaum-Herstellung in Gegenwart zumindest einer Verbindung der Formel (1a) sowie zumindest einer Verbindung der Formel (1b) erfolgt.

Die Herstellung entsprechender PU-Schäume bedarf an sich keiner weiteren Erläuterung mehr, dennoch werden im Folgenden einige bevorzugte Details zur Herstellung des erfindungsgemäß eingesetzten PU-Schaums genannt. Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt. Wenn nicht anders angegeben, bedeutet Kompression des Schaumstoffs im Sinne dieser Erfindung, dass der Schaumstoff vorzugsweise um mindestens 20%, bevorzugt mindestens 30%, insbesondere mindestens 60% bezogen auf sein Ausgangsvolumen, komprimiert wird, insbesondere über einen Zeitraum von mindestens 20 Stunden.

Als Polyurethane werden hier alle Reaktionsprodukte ausgehend von Isocyanaten, insbesondere von Polyisocyanaten, und entsprechend isocyanat-reaktiven Molekülen verstanden. Dies umfasst unter anderem auch Polyisocyanurate, Polyharnstoffe sowie Allophanat-, Biuret-, Uretdion-, Uretimin- oder Carbodiimid-enthaltende Isocyanat- oder Polyisocyanat-Reaktionsprodukte. Es versteht sich von selbst, dass der Fachmann zur Herstellung der unterschiedlichen Polyurethanweichschaumstoffe, beispielsweise von Heiß-, Kalt-, oder viskoelastischen Polyurethanweichschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere Polyurethanschaum-Typ, zu erhalten. Weitere Angaben zu den verwendeten Ausgangsstoffen, Katalysatoren sowie Hilfs- und Zusatzstoffen finden sich beispielsweise im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind lediglich beispielhaft genannt und können durch andere dem Fachmann bekannte Stoffe ersetzt und/oder ergänzt werden.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatische mehrfunktionale Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexa-hydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Schaumstoffen; üblicherweise verwendeten Polyetherpolyole und/oder Polyesterpolyole und/oder hydroxyl-gruppenhaltigen aliphatischen Polycarbonate, insbesondere Polyetherpolycarbonatpolyole und/oder Füllkörperpolyole (Polymerpolyole) wie SAN-, PHD- und PIPA-Polyole, die sich dadurch auszeichnen, dass sie feste organische Füllstoffe bis zu einem Feststoffgehalt von 40 % oder mehr in disperser Verteilung enthalten, und/oder autokatalytische Polyole, die katalytisch aktive funktionelle Gruppen, insbesondere Amino-Gruppen, enthalten, und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000 g/mol. Üblicherweise kommen die Polyole mit OH-Zahlen im Bereich von 10 bis 1200 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden. Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6359022 oder WO 96/12759. Weitere Polyole sind dem Fachmann bekannt und können zum Beispiel der EP-A-0380993 oder US-A-3346557 entnommen werden.

Gemäß einer bevorzugten Ausführungsform der Erfindung, insbesondere zur Herstellung von Form- und hochelastischen Weichschaumstoffen, werden zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Je nach den geforderten Eigenschaften dieser erfindungsgemäß bevorzugten Ausführungsform, insbesondere zur Herstellung der oben genannten Schaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 %. Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 2500 bis 15000 g/mol, bevorzugt 4500 bis 12000 g/mol und üblicherweise OH-Zahlen im Bereich von 5 bis 80, vorzugsweise 20 bis 50 mgKOH/g.

Gemäß einer weiteren bevorzugten Ausführungsform der Erfindung, insbesondere zur Herstellung von Blockweichschaumstoffen, werden zwei- und/oder dreifunktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 8000 g/mol, vorzugsweise 800 bis 5000 g/mol, besonders bevorzugt 2500 bis 4500 g/mol und üblicherweise OH-Zahlen im Bereich von 10 bis 100, vorzugsweise 20 bis 60 mgKOH/g.

Gemäß einer weiteren bevorzugten Ausführungsform der Erfindung, insbesondere zur Herstellung von Form- und hochelastischen Weichschaumstoffen, werden autokatalytische Polyole eingesetzt.

Gemäß einer weiteren bevorzugten Ausführungsform der Erfindung, insbesondere zur Herstellung von viskoelastischen Polyurethan-Schaumstoffen, werden vorzugsweise Gemische verschiedener, bevorzugt zweier oder dreier, mehrfunktioneller Polyesteralkohole und/oder Polyetheralkohole eingesetzt. Üblicherweise bestehen hier die eingesetzten Polyol-Kombinationen aus einem niedermolekularen "Crosslinker"-Polyol mit hoher Funktionalität, vorzugsweise mit einer OH-Zahl von 100 bis 270 mg KOH/g, und/oder einem konventionellen hochmolekularen Blockweichschaum- oder HR-Polyol und/oder einem "Hypersoft"-Polyetherpolyol, vorzugsweise mit einer OH-Zahl von 20 bis 40 mg KOH/g, mit hohem Anteil an Ethylenoxid und mit zellöffnenden Eigenschaften.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350, besonders bevorzugt 70 bis 140. Ein Index von 100 steht für ein molares Verhältnis der reaktiven Gruppen von 1 zu 1.

Je nach Anwendung kann es erfindungsgemäß bevorzugt sein, dass neben den erfindungsgemäßen Verbindungen nach den Formeln (1a) und (1b) zusätzliche Katalysatoren eingesetzt werden.

Der Ausdruck "zusätzliche Katalysatoren" umfasst im Sinne dieser Erfindung alle Verbindungen nach dem Stand der Technik, die in der Lage sind Isocyanat-Reaktionen zu katalysieren und/oder bei der Herstellung von Polyisocyanat-Reaktionsprodukten, insbesondere von Polyurethanschaumstoffen, als Katalysatoren, Co-Katalysatoren oder Aktivatoren eingesetzt werden.

Geeignete zusätzliche Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und AmmoniumSalze, und/oder metallhaltige Verbindungen.

Beispiele für geeignete zusätzliche stickstoffhaltige Verbindungen als Katalysatoren im Sinne der vorliegenden Erfindung sind die Amine Triethylamin, N,N-Dimethylcyclohexylamin, N,N-Dicyclohexylmethylamin, N,N,N',N'-Tetramethylethylen-1,2-diamin, N,N,N',N'-Tetramethylpropylen-1,3-diamin, N,N,N',N'-Tetramethyl-1,4-butandiamin, N,N,N',N'-Tetramethyl-1,6-hexandiamin, N,N,N',N",N"-Pentamethyldiethylentriamin, 1-(2-Aminoethyl)pyrrolidin, 1-(3-Aminopropyl)pyrrolidin, N,N,N',N",N"-Pentamethyldipropylentriamin, N,N-Bis[3-(dimethylamino)propyl]-N',N'-dimethylpropan-1,3-diamin, Triethylendiamin, 1,4-Diazabicyclo-[2.2.2]octane-2-methanol, 1,2-Dimethylimidazol, N-(2-Hydroxypropyl)imidazol, 1-lsobutyl-2-methylimidazol, N-(3-Aminopropyl)imidazol, N-Methylimidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Di-morpholinodiethylether, N,N'-Dimethylpiperazin, N-(2-Hydroxyethyl)piperazin, N-(2-Amino-ethyl)piperazin, N,N-Dimethylbenzylamin, 1-(2-Hydroxyethyl)pyrrolidin, 1-(3-Hydroxypropyl)pyrrolidin, Bis(2-Dimethylaminoethylether), Tris(dimethylamino-propyl)hexahydro-1,3,5-triazin, 1,8-Diazabicyclo[5.4.0]undec-7-en, 1,5-Diazabicyclo-[4.3.0]non-5-en, 1,5,7-Triazabicyclo[4.4.0]dec-5-en, N-Methyl-1,5,7-triazabicyclo[4.4.0]dec-5-en, 1,4,6-Triazabicyclo[3.3.0]oct-4-en, 1,1,3,3-Tetramethylguanidin, tert-Butyl-1,1,3,3-tetra-methylguanidin, Guanidin, Bis-N,N-(dimethylaminoethoxyethyl)isophorondicarbamat, 3-Dimethylamino-N,N-dimethylpropionamid und 2,4,6-Tris(dimethylaminomethyl)phenol. Geeignete zusätzliche stickstoffhaltige Katalysatoren, nach dem Stand der Technik, können zum Beispiel von der Firma Evonik unter dem Handelsnamen TEGOAMIN® und DABCO® bezogen werden.
Geeignete metallhaltige Verbindungen als zusätzliche Katalysatoren können zum Beispiel ausgewählt werden aus der Gruppe der metallorganischen oder organometallischen Verbindungen, metallorganischen oder organometallischen Salze, organische Metallsalze, anorganische Metallsalze sowie aus der Gruppe der geladenen oder ungeladenen metallhaltigen Koordinationsverbindungen, insbesondere der Metall-Chelat-Komplexe. Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt lonenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe). Geeignete metallhaltige Verbindungen, insbesondere wie oben definiert, als zusätzliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallhaltige Koordinationsverbindungen sind zum Beispiel alle Metall-Acetylacetonate wie Nickel(II)-acetylacetonat, Zink(II)-acetylacetonat, Kupfer(II)-acetylacetonat, Molybdändioxoacetylacetonat, alle Eisen-acetylacetonate, alle Cobalt-acetylacetonate, alle Zirconium-acetylacetonate, alle Titan-acetylacetonate, alle Bismuth-acetylacetonate und alle Zinn-acetylacetonate. Besonders geeignete metallorganische Salze und organische Metallsalze, insbesondere wie oben definiert, als zusätzliche Katalysatoren im Sinne dervorliegenden Erfindung sind zum Beispiel Organozinn-, Zinn-, Zink-, Bismuth und Kalium-Salze, insbesondere entsprechende Metall-Carboxylate, -Alkoholate, -Thiolate und - Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercaptoacetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zink(II)-acetat, Zink(II)-2-ethyl-hexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat (Bismuthoctoat), Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kalium-ricinoleat. Geeignete zusätzliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Neben zusätzlichen Aminen und metallhaltigen Verbindungen können auch Ammoniumsalze als zusätzliche Katalysatoren eingesetzt werden. Geeignet sind zum Beispiel Ammoniumformiat und/oder Ammoniumacetat.

Geeignete zusätzliche Katalysatoren sind beispielsweise in DE 102007046860, EP 1985642, EP 1985644, EP 1977825, US 2008/0234402, EP 0656382 B1 und US 2007/0282026 A1 und den darin zitierten Patentschriften genannt.

Geeignete Einsatzmengen an zusätzlichen Katalysatoren richten sich nach dem Typ des Katalysators und liegen vorzugsweise im Bereich von 0,01 bis 10,0 pphp, besonders bevorzugt im Bereich von 0,02 bis 5,00 pphp (= Gewichtsteile bezogen auf 100 Gewichtsteile Polyol) bzw. 0,10 bis 10,0 pphp für Kaliumsalze.

Die Verbindungen der Formeln (1a) und (1b) können zum Beispiel mit geeigneten Lösungsmitteln und/oder weiteren Zusatzstoffen eingesetzt werden. Als optionale Lösungsmittel kommen alle nach dem Stand der Technik geeigneten Substanzen in Frage. Je nach Anwendung können aprotisch-unpolare, aprotisch-polare und protische Lösungsmittel eingesetzt werden. Geeignete aprotisch-unpolare Lösungsmittel können beispielsweise ausgewählt werden aus folgenden Substanzklassen, bzw. Substanzklassen enthaltend folgende funktionelle Gruppen: aromatische Kohlenwasserstoffe, aliphatische Kohlenwasserstoffe (Alkane (Paraffine) und Olefine), Carbonsäurester und Polyester, (Poly) Ether und/oder halogenierte Kohlenwasserstoffe niedriger Polarität. Geeignete aprotisch-polare Lösungsmittel können beispielsweise ausgewählt werden aus folgenden Substanzklassen, bzw. Substanzklassen enthaltend folgende funktionelle Gruppen: Ketone, Lactone, Lactame, Nitrile, Carbonsäureamide, Sulfoxide und/oder Sulfone. Geeignete protische Lösungsmittel können beispielsweise ausgewählt werden aus folgenden Substanz-klassen, bzw. Substanzklassen enthaltend folgende funktionelle Gruppen: Alkohole, Polyole, (Poly-)Alkylenglykole, Amine, Carbonsäuren, insbesondere Fettsäuren und/oder primäre und sekundäre Amide. Besonders bevorzugt sind Lösungsmittel, die in der Verschäumung problemlos verarbeitet werden können und die Eigenschaften des Schaums nicht negativ beeinflussen. So sind zum Beispiel Isocyanat-reaktive Verbindungen geeignet, da diese mit in die Polymermatrix einreagieren und keine Emissionen im Schaum generieren. Beispiele sind OH-funktionelle Verbindungen wie (Poly-) Alkylenglykole, vorzugsweise Monoethylenglycol (MEG oder EG), Diethylenglycol (DEG), Triethylenglycol (TEG), 1-2-Propylenglycol (PG), Dipropylenglycol (DPG), Trimethylenglycol (1,3-Propandiol PDO), Tetramethylenglycol (Butandiol BDO), Butyldiglycol (BDG), Neopentylglycol, 2-Methyl-1,3-propan-diol (Ortegol CXT) und höhere Homologe davon wie zum Beispiel Polyethylenglykol (PEG) mit mittleren Molekülmassen zwischen 200 und 3000. Weitere besonders bevorzugte OH-funktionelle Verbindungen sind Polyether mit mittleren Molekülmassen von 200 bis 4500, insbesondere 400 bis 2000, hierin bevorzugt Wasser-, Methyl-, Ethyl-, Allyl-, Butyl- oder Nonyl-gestartete Polyether, insbesondere solche, die auf Propylenoxid- (PO) und/oder Ethylenoxid-Blöcken (EO) basieren.

Werden die Verbindungen nach den Formeln (1a) und (1b) gelöst oder in Kombination mit einem Lösungsmittel eingesetzt, oder vorgemischte Katalysatorkombinationen der Verbindungen den Formeln (1a) und (1b) mit zusätzlichen Katalysatoren, gelöst oder in Kombination mit einem Lösungsmittel eingesetzt, beträgt das Massenverhältnis der Summe aller Katalysatoren zum Lösungsmittel vorzugsweise von 100 zu 1 bis 1 zu 10, bevorzugt von 50 zu 1 bis 1 zu 5 und besonders bevorzugt von 25 zu 1 bis 1 zu 4.

Als optionale Zusatzstoffe können alle nach dem Stand der Technik bekannten Substanzen verwendet werden, die bei der Herstellung von Polyurethanen, insbesondere von Polyurethanschaumstoffen, Verwendung finden, wie zum Beispiel Treibmittel, vorzugsweise Wasser zur Bildung von CO₂ und, falls nötig, weitere physikalische Treibmittel, Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, Puffersubstanzen und/oder zusätzliche katalytisch aktive Substanzen, insbesondere wie oben definiert.

Bei der Herstellung von Polyurethanschaumstoffen wird in der Regel Wasser als Treibmittel eingesetzt. Vorzugsweise wird so viel Wasser eingesetzt, dass die Wassermenge 0,10 bis 15,0 pphp beträgt (pphp = Gewichtsteile bezogen auf 100 Gewichtsteile Polyol).

Es können auch geeignete physikalische Treibmittel eingesetzt werden. Dies sind beispielsweise verflüssigtes CO₂, und leichtflüchtige Flüssigkeiten, beispielsweise Kohlenwasserstoffe mit 3, 4 oder 5 Kohlenstoff-Atomen, bevorzugt cyclo-, iso- und n-Pentan, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Als optionale Vernetzer und optionale Kettenverlängererwerden niedermolekulare, gegenüber Isocyanaten reaktive, mehrfunktionelle Verbindungen bezeichnet. Geeignet sind zum Beispiel Hydroxyl- oder Aminterminierte Substanzen wie Glycerin, Neopentylglycol, 2-Methyl-1,3-propandiol, Triethanolamin (TEOA), Diethanolamin (DEOA) und Trimethylolpropan. Die Einsatzkonzentration liegt üblicherweise zwischen 0,1 und 5 Teilen, bezogen auf 100 Teile Polyol, kann aber je nach Formulierung auch davon abweichen. Bei der Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Geeignete optionale Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl- und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone.

Geeignete optionale Flammschutzmittel im Sinne dieser Erfindung sind alle Substanzen, die nach dem Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Zur Beeinflussung der Schaumeigenschaften von Polyurethanschäumen können bei deren Herstellung insbesondere Siloxane bzw. organomodifizierte Siloxane optional eingesetzt werden, wobei die im Stand der Technik genannten Substanzen verwendet werden können. Vorzugsweise werden solche Verbindungen eingesetzt, die für die jeweiligen Schaumtypen (Hartschäume, Heißweichschäume, viskoelastische Schäume, Esterschäume, Kaltweichschäume (HR-Schäume), halbharte Schäume) besonders geeignet sind. Geeignete (organomodifizierte) Siloxane sind beispielsweise in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben.

Als optionale (Schaum-)stabilisatoren können alle aus dem Stand der Technik bekannten Stabilisatoren eingesetzt werden. Bevorzugt werden Schaumstabilisatoren auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Stabilisatoren, insbesondere Schaumstabilisatoren sind unter anderem in US 2834748, US2917480 sowie in US3629308 beschrieben. Geeignete Stabilisatoren können von der Evonik Industries AG unter dem Handelsnamen TEGOSTAB® bezogen werden.

Die Siloxane können im Rahmen der vorliegenden Erfindung auch als Teil von Zusammensetzungen mit verschiedenen Trägermedien eingesetzt werden. Als Trägermedien kommen beispielweise Glykole, wie beispielsweise Monoethylenglycol (MEG), Diethylenglycol (DEG), Propylenglycol (PG) oder Dipropylenglycol (DPG), Alkoxylate oder Öle synthetischer und/oder natürlicher Herkunft in Frage.

Bevorzugt kann der Zusammensetzung zur Herstellung von Polyurethanschaumstoffen so viel der Siloxane zugegeben, dass der Massenanteil der Siloxane am fertigen Polyurethanschaum von 0,01 bis 10 Gew.-%, bevorzugt von 0,1 bis 3 Gew.-% beträgt.

Es kann vorteilhaft sein, wenn bei der Herstellung des Polyurethanweichschaums eine Zusammensetzung hergestellt und/oder eingesetzt wird, die zumindest die erfindungsgemäßen Verbindungen nach den Formeln (1a) und (1b), zumindest eine Polyolkomponente, ggf. zumindest eine Isocyanatkomponente sowie optional ein oder mehrere Treibmittel aufweist, und diese Zusammensetzung reagiert wird.

Die erfindungsgemäßen Verbindungen nach den Formeln (1a) und (1b) umfassen im Sinne dieser Erfindung ausdrücklich auch die entsprechend quaternisierten und/oder protonierten Verbindungen. Der Einsatz der Verbindungen nach den Formeln (1a) und (1b), die nicht quaternisiert oder protoniert sind, ist im Sinne dieser Erfindung allerdings besonders bevorzugt. Zur möglichen Quaternisierung der Verbindungen nach den Formeln (1a) und (1b) können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden. Die Verbindungen nach den Formeln (1a) und (1b) können, sofern quaternisiert, einfach oder mehrfach quaternisiert sein. Vorzugsweise sind Verbindungen nach den Formeln (1a) und (1b) nur einfach quaternisiert. Bei einfacher Quaternisierung sind die Verbindungen nach den Formeln (1a) und (1b) vorzugsweise an einem Stickstoffatom quaternisiert. Die Verbindungen nach den Formeln (1a) und (1b) können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll. Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Bor-basierende Säuren eingesetzt werden.

Es ist bevorzugt, dass die Verbindungen nach den Formeln (1a) und (1b) in Gesamtmenge in einem Massenanteil von 0,01 bis 20,0 Teilen (pphp), bevorzugt 0,01 bis 5,00 Teilen und besonders bevorzugt 0,02 bis 3,00 Teilen bezogen auf 100 Teile (pphp) Polyolkomponente eingesetzt werden.

Die Produktion der erfindungsgemäßen Polyurethanschaumstoffe kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Dabei können diskontinuierliche Verfahren oder kontinuierliche Verfahren zum Einsatz kommen.

Es können alle dem Fachmann bekannten Verfahren zur Herstellung von Polyurethanschaumstoffen verwendet werden. So kann zum Beispiel der Schäumungsprozess sowohl in horizontaler als auch in vertikaler Richtung, in diskontinuierlichen oder kontinuierlichen Anlagen erfolgen. Ebenso können die erfindungsgemäß eingesetzten Zusammensetzungen für die CO₂-Technologie benutzt werden. Die Verwendung in Niederdruck- und Hochdruckmaschinen ist möglich, wobei die zu verarbeitenden Zusammensetzungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Ein ganz besonders bevorzugter Polyurethanweichschaumstoff im Sinne dieser Erfindung weist insbesondere die folgende Zusammensetzung auf:

| Komponente | Gewichtsanteile (pphp) |
|---|---|
| Polyol | 100 |
| (Amin-)Katalysator | 0,01 bis 5 |
| Zinn-Katalysator | 0 bis 5, vorzugsweise 0,001 bis 2 |
| Siloxan | 0,1 bis 15, vorzugsweise 0,2 bis 7 |
| Wasser | 0 bis < 15, vorzugsweise 0,1 bis 10 |
| Weitere Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 50 |

Ein weiterer Gegenstand der vorliegenden Erfindung liegt in der Verwendung einer Kombination von zumindest einer Verbindung der Formel (1a) und zumindest einer Verbindung der Formel (1b), (1a) und (1b) wie jeweils weiter oben bereits definiert, bei der Herstellung von PU-Schaumstoff-Formkörpern, wobei der PU-Schaumstoff-Formkörper durch Umsetzung mindestens einer Polyolkomponente und mindestens einer Isocyanatkomponente in Gegenwart mindestens eines Treibmittels erhalten wurde, zur Bereitstellung von PU-Schaumstoff-Formkörpern mit verbesserter Dimensionswiedererlangung nach Kompression über einen Zeitraum von mindestens 20 Stunden.

Ein weiterer Gegenstand der vorliegenden Erfindung liegt in der Verwendung einer Kombination von zumindest einer Verbindung der Formel (1a) und zumindest einer Verbindung der Formel (1b), (1a) und (1b) wie jeweils weiter oben bereits definiert, zur Verbesserung der Dimensionswiedererlangung von PU-Schaumstoff-Formkörpern nach deren Kompression über einen Zeitraum von mindestens 20 Stunden, wobei der PU-Schaumstoff-Formkörper durch Umsetzung mindestens einer Polyolkomponente und mindestens einer Isocyanatkomponente in Gegenwart mindestens eines Treibmittels in Gegenwart zumindest einer Verbindung der Formel (1a) sowie zumindest einer Verbindung der Formel (1b) erhältlich ist.

Ein weiterer Gegenstand der vorliegenden Erfindung liegt in der Verwendung von Polyurethan-Weichschaumstoff in Matratzen und/oder Kissen, insbesondere Matratzen, wobei der Polyurethan-Weichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils weiter oben definiert, erhalten wurde. Hierzu sei insbesondere auf die vorangegangenen Ausführungen verwiesen, die auch für diesen Gegenstand Gültigkeit haben.

Die erfindungsgemäße Verwendung ermöglicht die Bereitstellung von Matratzen und/oder Kissen mit verbesserter Dimensionswiedererlangung nach Kompression über einen Zeitraum von mindestens 20 Stunden. Die erfindungsgemäße Verwendung ermöglicht eine verbesserte Dimensionswiedererlangung von Matratzen und/oder Kissen nach deren Kompression über einen Zeitraum von mindestens 20 Stunden.

Ein weiterer Gegenstand der Erfindung ist ein Verfahren zur Lagerung und/oder zum Transport von PU-Schaumstoff-Formkörpern, vorzugsweise Matratzen und/oder Kissen,
wobei
(a) in einem ersten Schritt ein PU-Schaumstoff-Formkörper durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils weiter oben definiert, und mindestens eines Treibmittels bereitgestellt wird,
(b) in optionalen Folgeschritten der erhaltene PU-Schaumstoff-Formkörper ggf. weiter aufbereitet wird, so dass er für den Anwendunsgzweck bereit gemacht ist,
(c) und wobei der (ggf. für den Anwendunsgzweck bereit gemachte) PU-Schaumstoff-Formkörper in einem finalen Schritt um mindestens 20%, vorzugsweise mindestens 30%, insbesondere mindestens 60%, bezogen auf sein Ausgangsvolumen, komprimiert und ggf. vakuumiert, und von einem Hilfsmittel, insbesondere Verpackungsmittel, in komprimierter Form gehalten wird, und der Lagerung und/oder dem Transport zugeführt wird.

Ein weiterer Gegenstand der Erfindung ist eine Mischung, umfassend zumindest eine Verbindung der Formel (1a) sowie zumindest eine Verbindung der Formel (1b), (1a) und (1b) wie jeweils weiter oben definiert, sowie optional Glykole, Polyether und/oder andere für die Zwecke der PU-Schaumstoffherstellung geeignete Lösemittel.

### Beispiele:

### Physikalische Eigenschaften der Polyurethanweichschaumstoffe:

Die hergestellten Polyurethanweichschäume wurden anhand folgender physikalischer Eigenschaften a) bis g) beurteilt:
a) Rücksacken des Schaumstoffes nach dem Ende der Steigphase (=Rückfall): Der Rückfall, bzw. das Nachsteigen ergibt sich aus der Differenz der Schaumhöhe nach direktem Abblasen und nach 3 Minuten. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe: ist die Höhe des gebildeten, frei gestiegenen Schaums nach 3 Minuten. Die Schaumhöhe wird in Zentimeter (cm) angegeben.
c) Steigzeit: Die Zeitspanne zwischen dem Ende des Mischens der Reaktionskomponenten und dem Abblasen des Polyurethanschaums.
d) Raumgewicht (RG): Die Bestimmung erfolgt, wie in ASTM D 3574 - 11 unter Test A beschrieben, durch Messung der Kerndichte. Das Raumgewicht wird in kg/m³ angegeben.
e) Porosität mit der Staudruckmessung: Die Gasdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei niedrigere Staudruckwerte einen offeneren Schaum charakterisieren. Die Werte wurden im Bereich von 0 - 300 mm gemessen.
   Die Messung des Staudrucks erfolgte mittels einer Apparatur umfassend eine Stickstoffquelle, Reduzierventil mit Manometer, Durchflussregelschraube, Waschflasche, Durchflussmessgerät, T-Stück, Auflagedüse und einem skalierten Glasrohr, in welches Wasser gefüllt ist. Die Auflagedüse weist eine Kantenlänge von 100 × 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.
   Die Messung erfolgt durch Einstellung des Stickstoffvordrucks per Reduzierventil auf 1 bar und Einregeln der Durchflussmenge auf 480 l/h. Die Wassermenge wird im skalierten Glasrohr so eingestellt, dass keine Druckdifferenz aufgebaut und ablesbar ist. Für die Vermessung des Prüfkörpers mit einer Dimension von 250 × 250 × 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.
   Die Auswertung erfolgt durch Mittelwertbildung über die fünf erhaltenen Messwerte.
f) Porosität über die Luftflussmethode: Neben der Staudruckmessung wurde für eine bessere Differenzierbarkeit der Offenzelligkeit im Bereich von 0 - 60 mm Staudruck zusätzlich die Porosität mittels der Luftflussmethode (engl. air flow method) in Anlehnung an ASTM D 3574 (2011-00) bestimmt. Aus den fertigen Schäumen wurden jeweils 12 Probekörper der Größe 5 cm × 5 cm × 2,5 cm ausgeschnitten und der Reihe nach in einem für diese Methode konstruierten Messgerät eingespannt. Der Aufbau dieses Gerätes ist unter ASTM D 3574 (2011-00) beschrieben. Das Messgerät erzeugt zwischen dem Inneren des Geräts und der umgebenden Atmosphäre ein Luftdruckdifferenzial von 125 Pa, indem durch den Probenkörper genau so viel Luft angesaugt wird, dass das Differenzial konstant eingestellt werden kann. Dadurch ist der Luftdurchfluss durch den Probenkörper ein Maß für die Porosität des Schaums. Gemessen wurden Werte im Bereich von 0 - 6 SCFM (Standardkubikfuß pro Minute), wobei niedrigere Werte einen geschlosseneren Schaum charakterisieren.
g) Zahl der Zellen pro cm (Zellzahl): Diese wird auf einer Schnittfläche optisch bestimmt (gemessen gemäß DIN EN 15702).

Der Vollständigkeit halber wird im Folgenden auch das VDA 278 Messprinzip erläutert.

### VDA 278 Messprinzip:

Die Werkstoffe werden hinsichtlich Art und Menge der aus ihnen ausgasbaren organischen Substanzen charakterisiert. Dazu werden zwei halbquantitative Summenwerte bestimmt, die eine Abschätzung der Emission von leichtflüchtigen organischen Verbindungen (VOC Wert), sowie den Anteil kondensierbarer Substanzen (Fog-Wert) ermöglichen. Ferner werden Einzelsubstanzen der Emission bestimmt. Bei der Analyse werden die Proben thermisch extrahiert, die Emissionen gaschromatografisch aufgetrennt und massenspektrometrisch detektiert. Die so erhaltenen Gesamtkonzentrationen für den VOC-Anteil werden in Toluol-Äquivalenten berechnet und ergeben als Ergebnis den VOC-Wert, der FOG-Anteil wird in Hexadecan-Äquivalenten dargestellt und ergibt den FOG-Wert.

Das Analysenverfahren dient zur Ermittlung von Emissionen aus nichtmetallischen Materialien, die für Formteile in Kraftfahrzeugen zum Einsatz kommen, dazu gehören auch Schaumstoffe.

Bei der Thermodesorptionsanalyse (TDS) werden geringe Materialmengen in einem Desorptionsrohr definiert aufgeheizt, die dabei emittierenden flüchtigen Substanzen mit Hilfe eines Inertgas-Stromes in einer Kühlfalle eines Temperatur-programmierbaren Verdampfers kryofokusiert. Nach Beendigung der Ausheizphase wird die Kühlfalle rasch auf 280°C erhitzt. Dabei verdampfen die fokussierten Substanzen. Sie werden anschließend in der gaschromatografischen Trennsäule aufgetrennt und massenspektrometrisch detektiert. Durch Kalibration mit Bezugssubstanzen ist eine halbquantitative Abschätzung der Emission, ausgedrückt in "µg/g", möglich. Als quantitative Bezugssubstanzen werden Toluol für die VOC-Analyse (VOC-Wert) und n-Hexadecan für den Fog-Wert verwendet. Anhand ihrer Massenspektren und Retentionsindizes können Signalpeaks Substanzen zugeordnet werden. Quelle: VDA 278/10.2011, www.vda.de

### Analytik:

### Prüfkörper: Probenvorbereitung, Probenahme und Probekörperabmessungen:

Nach dem Entformen der Schäume werden diese 24 Stunden bei 21 °C und ca. 50% relativer Luftfeuchte gelagert. Es werden dann Probekörper gleichmäßig verteilt über die Breite des (abgekühlten) Formteils an geeigneten und repräsentativen Stellen entnommen. Danach werden die Schäume in eine Aluminium-Folie eingeschlagen und in einem Polyethylenbeutel versiegelt.

Die Menge der Schaumproben, die in das Desorptionsröhrchen eingeführt wird, beträgt jeweils 10-15 mg.

### Durchführung der Prüfung: VOC/FOG Thermodesorption:

Direkt nach Erhalt der versiegelten Probekörper werden diese der Direktbestimmung zugeführt. Die Proben werden vor Beginn der Analyse auf der Analysenwaage auf 0,1 mg genau ausgewogen und die entsprechende Schaummenge in dem Desorptionsröhrchen mittig platziert. Ein Heliumstrom wird über die Probe geleitet und diese auf 90 °C für 30 Minuten aufgeheizt. Alle flüchtigen Substanzen werden in einer Kühlfalle, die mit flüssigem Stickstoff gekühlt wurde, aufgefangen. Nach 30 Minuten wird die Kühlfalle auf 280 °C aufgeheizt. Die verdampfenden Substanzen werden mittels der beschriebenen gaschromatographischen Säule voneinander getrennt und anschließend massenspektroskopisch analysiert.

### Geräteparameter GC-MS

Es wird das folgende Gerät für die Analyse verwendet:
Fa. Gerstel
D-45473 Mühlheim an der Ruhr,
Eberhard-Gerstel-Platz 1 TDS-3 / KAS-4
Tenax®-Desorptionsröhrchen
Agilent Technologies 7890A (GC) / 5975C (MS)
Säule: HP Ultra2 (50m, 0,32mm, 0,52µm)
Trägergas: Helium

Im Folgenden wird der Rollverformungstest beschrieben, mit dem im Sinne dieser Erfindung die Dimensionswiedererlangung nach Kompression überprüfbar ist. Der Rollverformungstest ist ein weiterer Gegenstand der Erfindung.

### Rollverformungstest:

### Zielstellung:

Aufgabe des Tests ist es, die Bedingungen von gerollten Matratzen im Labor zu simulieren. Da es hierfür keinen aussagekräftigen Industriestandard gibt, wurde ein neuer Test entwickelt, der das Aufrollen von Matratzenschaumstoffen im kleinen Maßstab nachbildet.

### Probenvorbereitunq:

Aus den Schaumstoffblöcken, wie sie zum Beispiel aus Handverschäumungen erhalten werden, werden Probenkörper mit den Maßen 12 cm (Breite), 16 cm (Länge) und 2,5 cm (Dicke) mit einer Messerbandsäge herausgeschnitten. Dabei wird eine mittlere Position in Schaumblöcken aus Handverschäumungen gewählt. Der Probenkörper wird so herausgeschnitten, dass die Steigrichtung des Schaumes bei der Herstellung rechtwinklig zur Länge und Breite des Probenkörpers steht. Probenkörper werden mit einem Filzschreiber gekennzeichnet.

### Durchführung Test:

Der Probenkörper wird an einer 12 cm-Kante mit einem dünnen Metallstab mit 5 - 8 mm Durchmesser zusammengedrückt. Dann beginnt man den Schaumprobenkörper um diesen Metallstab von Hand aufzurollen. Dabei wird der Schaum stark komprimiert und es entsteht eine Rolle mit einem Durchmesser von etwa 3 - 4 cm. Diese Rolle wird mit der Hand in diesem komprimierten Zustand fixiert und vollständig in eine Pappröhre geschoben. Die Pappröhre hat einen Innendurchmesser von 4 cm und ist mindestens 13 cm lang. Sobald sich der gerollte Schaum vollständig in der Röhre befindet, wird der Metallstift herausgezogen. Zur Verringerung der Reibung beim Herausziehen kann der Metallstift vor dem Rollen des Schaums leicht angefettet werden. Der Schaum füllt dann das Volumen der Röhre. Dabei ist die Kompression des Schaums im Zentrum sehr viel stärker, als am Rand zur Röhre. Anschließend wird die Rolle unter kontrollierten und konstanten Bedingungen (Temperatur: 21 °C, Luftfeuchte: 60%) 7 Tage gelagert. Nach 168 Stunden wird der Schaum mit den Fingern aus der Röhre gezogen, auf eine gerade Fläche gelegt und das Ausrollen des Schaums beobachtet. Dabei darf die Expansion des Schaums nicht gestört oder beeinflusst werden.

### Auswertung:

Dem Schaum wird 10 Minuten Zeit zur Expansion gelassen. Anschließend werden die Probenkörper bewertet. Hierbei ist das wichtigste Kriterium, ob der Schaum vollständig wieder seine ursprüngliche Dicke wiedergewonnen hat, oder - speziell an dem stärker komprimierten Rand - noch Verdichtungszonen aufweist. Manchmal ist auch an der Oberfläche des Probenkörpers noch eine Rille von der Kompression erkennbar. Sehr schlechte Probenkörper verbleiben an einem Ende aufgerollt. Eine leichte Biegung des Probenkörpers nach Expansion ist normal und wird nicht in die Bewertung einbezogen. Folgende Abstufungen wurden für die Evaluierung verwendet:
+++ : Probenkörper hat sich vollständig entrollt, überhaupt keine Kompressionslinien oder Verdichtungen erkennbar, Expansion erfolgt schnell und ist schon nach 5 min vollständig.
++ : Der Probenkörper hat an allen Stellen wieder die Dicke von 2,5 cm erreicht. An der Oberfläche (besonders an dem stärker komprimierten Ende) sind nach 10 Minuten keine Einkerbungen und Rillen mehr sichtbar.
+ : Der Probenkörper hat an allen Stellen wieder die Dicke von 2,5 cm erreicht. Allerdings sind an der Oberfläche (besonders an dem stärker komprimierten Ende) nach wie vor leichte Einkerbungen und Rillen sichtbar.
0 : Der Probenkörper weist an dem stärker komprimierten Ende eine leichte Verdichtung auf. Die Dicke beträgt dort mehr als 2,0 cm, aber weniger als 2,5 cm. Eine Einkerbung ist an diesem Ende deutlich sichtbar.
- : Probenkörper weist an dem stärker komprimierten Ende eine leichte Verdichtung auf. Die Dicke der Probe ist dort mehr als 1 cm aber noch deutlich weniger als 2,0 cm.
- - : Probenkörper weist an dem stärker komprimierten Ende eine starke Verdichtung auf. Die Dicke der Probe ist dort weniger als 1 cm. Die Probe ist an diesem Ende noch ansatzweise eingerollt.
- - - : Probenkörper ist an dem stärker komprimierten Ende nach wie vor eingerollt und komprimiert.
Die Evaluierung wird vorzugsweise von mindestens zwei Personen vorgenommen. Die Ergebnisse werden dokumentiert. Im Rahmen der vorliegenden Erfindung wurde die Evaluierung von vier Personen vorgenommen, die zu übereinstimmenden Ergebnissen kamen.

### Störungen und Randbedingungen des Tests:

Bei dem Test ist auf korrekte Dimensionen des Probenkörpers und gleichmäßiger Durchführung des Einrollens zu achten. Der Schaumstoff-Probenkörper muss konstante Zellstrukturparameter aufweisen, d.h. im Besonderen eine konstante Zellgröße und eine konstante Luftdurchlässigkeit. Der Metallstift darf nicht zu stark gefettet werden, damit kein Fett in die Probe eindringt. Konstante Lagerbedingungen sind einzuhalten. Probenkörper mit den verschiedenen Evaluierungsstufen sind zum Vergleich bereit zu halten.

### Genauigkeit des Tests:

Die Durchführung des Tests mit mehreren Personen zur Evaluierung führt regelmäßig zu übereinstimmenden Bewertungen. Auch bei Wiederholungsmessungen wurde regelmäßig das gleiche Ergebnis bestätigt. Damit erweist sich der Test als überaus zuverlässig.

### Weichschaum - Verschäumunqsbeispiele:

### Beispiel 1: Herstellung von Polyurethanweichschaumstoffen (Weichblockschaum)

Für die anwendungstechnische Ausprüfung der erfindungsgemäßen Verbindungen der Formeln (1a) und (1b) wurden die in Tabelle 3 angegeben Schaumformulierung verwendet.

**Tabelle 3: Formulierung 1 für Weichblockschaum-Anwendungen.**

| Formulierung 1 | Massenteile (pphp) |
|---|---|
| Polyol 1¹⁾ | 100 Teile |
| Wasser | 4,00 Teile |
| Zinn-Katalysator²⁾ | 0,20 Teile |
| Amin-Katalysatoren | variabel |
| TEGOSTAB® BF 2370³⁾ | 1,00 Teile |
| Desmodur® T 80⁴⁾ | 50,0 Teile |

| | |
|---|---|
| ¹⁾Polyol 1: Voranol™ CP 3322 erhältlich bei der Firma Dow Chemical, hierbei handelt es sich um ein glycerin-basiertes Polyetherpolyol mit einer OH-Zahl von 48 mg KOH/g ²⁾KOSMOS® 29, erhältlich bei der Firma Evonik Industries: Zinn(II)-Salz der 2-Ethylhexansäure. ³⁾Polyethermodifiziertes Polysiloxan. erhältlich bei der Firma Evonik Industries ⁴⁾Toluylendiisocyanat T 80 (80 % 2,4-Isomer, 20 % 2,6-Isomer) der Firma Covestro, 3 mPa·s, 48 % NCO, Funktionalität 2. | |

Bei der Verschäumung wurden jeweils 400 g Polyol eingesetzt; die anderen Formulierungsbestandteile wurden entsprechend umgerechnet. Dabei bedeutete beispielsweise 1,00 Teil einer Komponente 1,00 g dieser Substanz je 100 g Polyol.

Die Durchführung der Verschäumungen erfolgte im sogenannten Handmischverfahren. Es wurde die Formulierung 1, wie in Tabelle 3 angegeben, mit verschiedenen Amin-Katalysatoren verwendet. Dazu wurden in einem Pappbecher Polyol, die jeweilige Amin-Katalysatorenmischung, der Zinn-Katalysator Zinn(II)-2-ethylhexanoat, Wasser und der Schaumstabilisator vorgelegt und mit einem Scheibenrührer für 60 s bei 1000 U/min vermischt. Nach dem ersten Rühren wurde das Isocyanat (TDI) zu der Reaktionsmischung gegeben und 7 s bei 2500 U/min verrührt und sofort in eine mit Papier ausgekleidete Kiste (30 cm × 30 cm Grundfläche und 30 cm Höhe) überführt. Der Schaum stieg nach dem Eingießen in der Verschäumungsbox auf. Im Idealfall blies der Schaum bei Erreichen der maximalen Steighöhe ab und sackte dann leicht zurück. Dabei öffneten sich die Zellmembranen der Schaumbläschen und eine offenporige Zellstruktur des Schaumstoffs wurde erhalten. Zur Beurteilung der katalytischen Eigenschaften wurden die folgenden charakteristischen Parameter bestimmt: Steigzeit, Steighöhe und Rücksacken des Schaumstoffes nach dem Ende der Steigphase (=Rückfall).

Aus den resultierenden Schaumblöcken wurden definierte Schaumkörper ausgeschnitten, welche weiter analysiert wurden. Folgende physikalischen Eigenschaften wurden an Hand der Probenkörper bestimmt: Zellzahl, Porosität mittels Staudruck- und mittels Luftflussmethode, Raumgewicht (RG) und Rollverformung bei Raumtemperatur.

Die Ergebnisse der Beurteilung der Eigenschaften der erfindungsgemäßen Verbindungen sowie der physikalischen Eigenschaften der resultierenden Blockweichschaumstoffe sind in Tabelle 4 zusammengestellt. Als Vergleichskatalysator nach dem Stand der Technik wurde DABCO® DMEA eingesetzt. Mit Ausnahme des Vergleichskatalysators wurden jeweils äquimolare Mengen an Amin eingesetzt, wodurch bei der Umrechnung auf Gewichtsteile bezogen auf 100 Gewichtsteile Polyol leicht unterschiedliche Einsatzmengen erhalten wurden. Fürden Vergleichskatalysator wurde die kleinstmögliche molare Menge eingesetzt, die zu einem qualitativ vergleichbaren Schaumergebnis führte.

| Amin | DABCO® NE 750/ DABCO® NE 300 (3:1) Erfindungsgemäß | DABCO® NE 750/ DABCO® NE 310 (3:1) | DABCO® NE 1082/ DABCO® NE 300 (3:1) Erfindungsgemäß | DABCO® NE 1082/ DABCO® NE 310 (3:1) | DABCO® DMEA |
|---|---|---|---|---|---|
| Massenteile (pphp) | 0,11 | 0,11 | 0,15 | 0,15 | 0,15 |
| Steigzeit (s) | 96 | 96 | 91 | 91 | 100 |
| Steighöhe (cm) | 31,5 | 31,6 | 29,4 | 29,6 | 28,4 |
| Rückfall (cm) | 0,3 | 0,3 | 0,0 | 0,2 | -0,2 |
| Zellen (pro cm) | 13 | 14 | 13 | 12 | 13 |
| Dichte (kg/m³) | 23,9 | 24,1 | 24,0 | 24,4 | 24,7 |
| Porosität (mm Wassersäule) | 13 | 10 | 13 | 16 | 20 |
| Porosität (SCFM) | 3,57 | 3,73 | 2,71 | 2,50 | 3,24 |
| Rollverformung (7 d, 21 °C) | ++ | 0 | + | -- | -- |

Insbesondere für eine genaue Reproduzierbarkeit des Rollverformungstests ist eine vergleichbare Zellzahl und Porosität entscheidend. Daher wurde die Katalysatoreinsatzmenge so gewählt, dass die fertigen Schäume eine Zellzahl von 12 - 14 Zellen pro Zentimeter und eine Porosität von unter 30 mm Wassersäule aufwiesen. Die Luftflussmethode ist in diesem offenzelligen Porositätsbereich deutlich genauer. Aus diesem Grund wurde die Porosität über diese Methode zwischen 2,00 und 4,00 SCFM gewählt und bei den einzelnen Vergleichspaaren eine maximale Porositätsdifferenz von ± 0,4 gewählt.

Wie der Tabelle 4 entnommen werden kann, zeigen die erfindungsgemäße Kombination einer Verbindung nach Formel (1a) (hier DABCO® NE 300) mit einer Verbindung der Formel (1b) (hier DABCO® NE 750, sowie DABCO® NE 1082) signifikante Vorteile beim Rollverformungstests gegenüber nicht erfindungsgemäßen Kombinationen von Katalysatoren.

Die Wiederherstellung der ursprünglichen Form der Probenkörper nach Rollverformung konnte ganz entscheidend verbessert werden. So erreichen innerhalb von 10 min Ruhezeit alle mit der erfindungsgemäßen Kombination von emissionsfreien Treib- und Gelkatalysatoren hergestellten Schaumkörper ihre ursprüngliche Dicke von 2,5 cm und weisen entweder keine oder nur leichte Rillen an der Oberfläche auf. Dagegen weisen die mit nicht erfindungsgemäßen Katalysatoren hergestellten Schaumproben allesamt Schaumverdichtungen auf und erreichen in unterschiedlich starker Ausprägung ihre ursprüngliche Schaumhöhe sowie Form nicht. Außerdem erwiesen sich die erfindungsgemäßen Schäume als besonders emissionsarm mit Blick auf Amin-Emissionen. Die Vorteilhaftigkeit der Erfindung wurde auch bei anderen Schaumtypen, wie Kaltweichschaumstoffen (Block- & Formschaumstoffe) und viskoelastischen Schaumstoffen bestätigt.

## Patentansprüche

1. PU-Schaumstoff-Formkörper, vorzugsweise Matratzen und/oder Kissen, **dadurch gekennzeichnet, dass** der Polyurethan-Schaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b) und mindestens eines Treibmittels erhalten wurde,
Formeln (1a) und (1b) wie nachfolgend definiert: 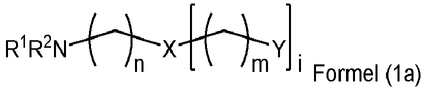 wobei für Formel (1a) gilt:
X Sauerstoff, Stickstoff oder Amin (NR³ oder NR³R⁴), insbesondere Sauerstoff,
Y Amin NR⁸R⁹ oder Ether OR⁹, insbesondere Amin NR⁸R^{9,} mit R⁸ = Methyl und R⁹ = Aminopropyl,
R^{1,2} gleiche oder verschiedene Kohlenwasserstoffreste mit 1-8 C-Atomen, Phenyl, Cyclohexyl oder Wasserstoff, bevorzugt Methyl, Ethyl, *iso*-Propyl oder Wasserstoff, besonders bevorzugt Methyl oder Wasserstoff, insbesondere Methyl,
R³⁻⁹ gleiche oder verschiedene Kohlenwasserstoffreste mit 1-8 C-Atomen, die ggf. eine NH oder NH₂-Gruppe tragen, Phenyl, Cyclohexyl oder Wasserstoff, bevorzugt Methyl, Ethyl, *iso*-Propyl, Aminoalkyl oder Wasserstoff, besonders bevorzugt Methyl, Aminopropyl oder Wasserstoff, insbesondere Methyl oder Aminopropyl,
m gleich 1 bis 4, bevorzugt 2 und 3, insbesondere 2,
n gleich 2,
i gleich 0 bis 3, bevorzugt 0, 1, und 2, insbesondere 1,
mit der Maßgabe, dass mindestens eine der Gruppen X, Y oder R¹⁻⁹ eine mit der Polyurethanmatrix reaktive Funktionalität, bevorzugt eine isocyanatreaktive Funktionalität, insbesondere bevorzugt NH oder OH trägt, 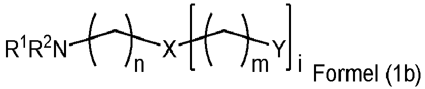 wobei für Formel (1b) gilt:
X Sauerstoff, Stickstoff, Hydroxyl, Amine (NR³ oder NR³R⁴) oder Harnstoff (N(R⁵)C(O)N(R⁶) oder N(R⁵)C(O)NR⁶R⁷), insbesondere Harnstoff (N(R⁵)C(O)N(R⁶) oder N(R⁵)C(O)NR⁶R⁷) oder Stickstoff,
Y Amin (NR⁸R⁹) oder Ether (OR⁹), insbesondere Amin (NR⁸R⁹) mit R⁸ und R⁹= Methyl,
R^{1,2} gleiche oder verschiedene Kohlenwasserstoffreste mit 1-8 C-Atomen, die ggf. eine OH-Gruppe tragen, Phenyl, Cyclohexyl oder Wasserstoff, bevorzugt Methyl, Ethyl, *iso*-Propyl,-C₂H₃(OH)CH₃, -C₂H₄OH oder Wasserstoff, besonders bevorzugt Methyl, -C₂H₃(OH)CH₃,-C₂H₄OH oder Wasserstoff, insbesondere Methyl oder Wasserstoff,
R³⁻⁹ gleiche oder verschiedene Kohlenwasserstoffreste mit 1-8 C-Atomen, die ggf. eine OH- oder eine NH/NH₂-Gruppe tragen, Phenyl, Cyclohexyl oder Wasserstoff, bevorzugt Methyl, Ethyl, *iso*-Propyl, -C₂H₃(OH)CH₃, -C₂H₄OH, Aminoalkyl oder Wasserstoff, besonders bevorzugt Methyl, -C₂H₃(OH)CH₃, -C₂H₄OH, Aminopropyl oder Wasserstoff, insbesondere Wasserstoff oder Methyl,
m gleich 1 bis 4, bevorzugt 2 und 3, insbesondere 3,
n gleich 3,
i gleich 0 bis 3, bevorzugt 0, 1, und 2, insbesondere 1 oder 2,
mit der Maßgabe, dass mindestens eine der Gruppen X, Y oder R¹⁻⁹ eine mit der Polyurethanmatrix reaktive Funktionalität, bevorzugt eine isocyanatreaktive Funktionalität, insbesondere bevorzugt NH oder OH trägt.

2. PU-Schaumstoff-Formkörper, vorzugsweise Matratze und/oder Kissen, nach Anspruch 1, **dadurch gekennzeichnet, dass** der PU-Schaumstoff ein Polyurethan-Weichschaumstoff, wie insbesondere ein Polyurethan-Heißweichschaum, ein Polyurethan-Kaltweichschaum oder ein viskoelastischer Polyurethanweichschaum, ist.

3. PU-Schaumstoff-Formkörper, vorzugsweise Matratze und/oder Kissen, nach Anspruch 1 oder 2, **dadurch gekennzeichnet, dass** der Polyurethan-Weichschaumstoff eine Rückprallelastizität von 1-80 % aufweist, gemessen nach DIN EN ISO 8307:2008-03, und/oder ein Raumgewicht von 5 bis 150 kg/m³ und/oder eine Porosität, ggf. nach Aufdrücken der Schäume, von 1 bis 250, insbesondere 1 bis 50 mm Wassersäule hat.

4. PU-Schaumstoff-Formkörper, vorzugsweise Matratze und/oder Kissen, nach einem der Ansprüche 1 bis 3, **dadurch gekennzeichnet, dass** der Polyurethan-Weichschaumstoff eine Stauchhärte CLD, 40 % nach DIN EN ISO 3386-1:2015-10 von 0,1 bis 8,0 kPa aufweist.

5. PU-Schaumstoff-Formkörper, vorzugsweise Matratze und/oder Kissen, nach einem der Ansprüche 1 bis 4, **dadurch gekennzeichnet, dass** der Polyurethan-Weichschaumstoff ein Polyurethan-Heißweichschaum ist, und vorzugsweise eine Stauchhärte CLD, 40 % nach DIN EN ISO 3386-1:2015-10 von 2,0 - 8,0 kPa, und/oder eine Rückprallelastizität von 15 - 60 %, gemessen nach DIN EN ISO 8307:2008-03, und/oder ein Raumgewicht von 8 bis 80 kg/m³ und/oder eine Porosität von 1 bis 250, insbesondere 1 bis 50 mm Wassersäule hat.

6. PU-Schaumstoff-Formkörper, vorzugsweise Matratze und/oder Kissen, nach einem der Ansprüche 1 bis 4, **dadurch gekennzeichnet, dass** der Polyurethan-Weichschaumstoff ein Polyurethan-Kaltweichschaum ist, und vorzugsweise eine Stauchhärte CLD, 40 % nach DIN EN ISO 3386-1:2015-10 von 2,0 - 5,0 kPa, insbesondere von 2,5 - 4,5 kPa, und/oder eine Rückprallelastizität von ≥ 55 %, gemessen nach DIN EN ISO 8307:2008-03, und/oder ein Raumgewicht von 25 bis 80 kg/m³ und/oder eine Porosität, vorzugsweise nach Aufdrücken des Schaumes, von 1 bis 250, insbesondere 1 bis 50 mm Wassersäule hat.

7. PU-Schaumstoff-Formkörper, vorzugsweise Matratze und/oder Kissen nach einem der Ansprüche 1 bis 4, **dadurch gekennzeichnet, dass** der Polyurethan-Weichschaumstoff ein viskoelastischer Polyurethanweichschaum ist, und vorzugsweise eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 3,0 kPa, und/oder eine Rückprallelastizität von < 10 %, gemessen nach DIN EN ISO 8307:2008-03, und/oder ein Raumgewicht von 30 bis 130 kg/m³ und/oder eine Porosität, vorzugsweise nach Aufdrücken des Schaumes, von 1 bis 250, insbesondere 1 bis 50 mm Wassersäule hat.

8. PU-Schaumstoff-Formkörper, vorzugsweise Matratze, nach einem der Ansprüche 1 bis 7, **dadurch gekennzeichnet, dass** der Formkörper eine Höhe von mindestens 1 cm bis maximal 50 cm aufweist, sowie eine Breite von mindestens 20 cm bis maximal 300 cm, vorzugsweise mindestens 70 cm bis maximal 200 cm, sowie eine Länge von mindestens 20 cm bis maximal 300 cm, vorzugsweise von mindestens 150 cm bis maximal 220 cm.

9. PU-Schaumstoff-Formkörper, vorzugsweise Matratze, nach einem der Ansprüche 1 bis 7, **dadurch gekennzeichnet, dass** der PU-Schaumstoff-Formkörper, bezogen auf sein Ausgangsvolumen um mindestens 20%, vorzugsweise mindestens 30%, insbesondere mindestens 60% komprimiert wurde und von einem Hilfsmittel, insbesondere Verpackungsmittel, für mindestens 20 Stunden in komprimierter Form gehalten wird.

10. PU-Schaumstoff-Formkörper, vorzugsweise Matratze, nach Anspruch 9, **dadurch gekennzeichnet, dass** der PU-Schaumstoff-Formkörper komprimiert und vorzugsweise vakuumiert vorliegt.

11. PU-Schaumstoff-Formkörper nach Anspruch 10, **dadurch gekennzeichnet, dass** er eine Rollmatratze ist.

12. Verwendung einer Kombination von zumindest einer Verbindung der Formel (1a) und zumindest einer Verbindung der Formel (1b), (1a) und (1b) wie jeweils in Anspruch 1 definiert, zur Verbesserung der Dimensionswiedererlangung von PU-Schaumstoff-Formkörpern nach deren Kompression über einen Zeitraum von mindestens 20 Stunden, wobei der PU-Schaumstoff-Formkörper durch Umsetzung mindestens einer Polyolkomponente und mindestens einer Isocyanatkomponente in Gegenwart mindestens eines Treibmittels in Gegenwart zumindest einer Verbindung der Formel (1a) sowie zumindest einer Verbindung der Formel (1b) erhältlich ist.

13. Verfahren zur Lagerung und/oder zum Transport von PU-Schaumstoff-Formkörpern, vorzugsweise Matratzen und/oder Kissen,
wobei
(d) in einem ersten Schritt ein PU-Schaumstoff-Formkörper durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils in Anspruch 1 definiert, und mindestens eines Treibmittels bereitgestellt wird,
(e) in optionalen Folgeschritten der erhaltene PU-Schaumstoff-Formkörper ggf. weiter aufbereitet wird, so dass er für den Anwendungszweck bereit gemacht ist,
(f) und wobei der (ggf. für den Anwendungszweck bereit gemachte) PU-Schaumstoff-Formkörper in einem finalen Schritt um mindestens 20%, vorzugsweise mindestens 30%, insbesondere mindestens 60%, bezogen auf sein Ausgangsvolumen, komprimiert und ggf. vakuumiert, und von einem Hilfsmittel, insbesondere Verpackungsmittel, in komprimierter Form gehalten wird, und der Lagerung und/oder dem Transport zugeführt wird.

14. Verwendung von Polyurethan-Weichschaumstoff in Matratzen und/oder Kissen, insbesondere Matratzen, wobei der Polyurethan-Weichschaumstoff durch Umsetzung mindestens einer Polyolkomponente und mindestens einer Isocyanatkomponente in Gegenwart zumindest einer Verbindung der Formel (1a) sowie zumindest einer Verbindung der Formel (1b), (1a) und (1b) wie jeweils in Anspruch 1 definiert, erhalten wurde, vorzugsweise zur Bereitstellung von (vorzugsweise komprimierten) Matratzen und/oder Kissen mit verbesserter Dimensionswiedererlangung nach Kompression über einen Zeitraum von mindestens 20 Stunden, insbesondere mit verbessertem Emissionsverhalten.

15. Mischung, umfassend zumindest eine Verbindung der Formel (1a) sowie zumindest eine Verbindung der Formel (1b), (1a) und (1b) wie jeweils in Anspruch 1 definiert, sowie optional Glykole, Polyether und/oder andere für die Zwecke der PU-Schaumstoffherstellung geeignete Lösemittel, werden die Verbindungen nach den Formeln (1a) und (1b) gelöst oder in Kombination mit einem Lösungsmittel eingesetzt, oder vorgemischte Katalysatorkombinationen der Verbindungen den Formeln (1a) und (1b) mit zusätzlichen Katalysatoren, gelöst oder in Kombination mit einem Lösungsmittel eingesetzt, beträgt das Massenverhältnis der Summe aller Katalysatoren zum Lösungsmittel vorzugsweise von 100 zu 1 bis 1 zu 10, bevorzugt von 50 zu 1 bis 1 zu 5 und besonders bevorzugt von 25 zu 1 bis 1 zu 4.
